# EUROPEAN PATENT SPECIFICATION

(11) **EP 2 473 656 B1**
(45) Date of publication and mention of the grant of the patent: **13.05.2015**
(21) Application number: 10814514.5
(22) Date of filing: 02.09.2010
(51) Int. Cl.: D01D 5/26, D01D 5/22, D01F 6/06, D01F 1/10, D06N 7/00

(54) **Carpet**
Teppich
Tapis

(30) Priority: 04.09.2009 US 554371
(43) Date of publication of application: 11.07.2012
(73) Proprietor: Imerys Pigments, Inc., Roswell, GA 30076 (US)
(72) Inventor: MCAMISH, Larry, Marietta GA 30062 (US)
(74) Representative: Rushton, David John
(86) International application number: PCT/US2010/047722
(87) International publication number: WO 2011/028934

(56) References cited:
- WO-A1-2009/094321
- WO-A2-2008/077156
- US-A- 4 444 921
- US-A- 5 166 238
- US-A- 5 212 223
- US-A- 5 213 866
- US-A1- 2003 203 695
- US-A1- 2005 165 193
- US-A1- 2007 087 159
- US-A1- 2007 122 614
- US-A1- 2007 269 654
- US-A1- 2008 081 862
- US-B2- 7 309 522

## Description

### FIELD OF THE DISCLOSURE

The disclosure herein generally discusses and relates to fibers, particularly staple fibers comprising fillers such as coated ground calcium carbonate, and carpets comprising the same.

### BACKGROUND

Many commercial products are formed from components that may include monofilament fibers of polymeric resins. For instance, continuous monofilament fibers may be used to make staple fibers, yarns, fishing line, woven fabrics, non-woven fabrics, artificial furs, diapers, feminine hygiene products, adult incontinence products, packaging materials, wipes, towels, industrial garments, medical drapes, medical gowns, foot covers, sterilization wraps, table cloths, surface cleaning cloths (dry and wet), paint brushes, napkins, trash bags, various personal care articles, and other textile products.

Monofilament fibers are generally made by melt spinning, dry spinning, or wet spinning. In particular, monofilament fibers may be produced by spinning a polymeric resin into the shape of a fiber, for example, by heating the resin at least to its softening temperature and extruding the resin through a spinneret to form monofilament fibers. Monofilament fibers may also be produced by extruding the resin and attenuating the streams of resin by hot air to form fibers with a fine diameter. In turn, monofilament fibers, after conversion into staple fibers, can be used to make spunlaced (also referred to as hydro-entangled), needle-punched, thermal bonded, and card-and-bind products, which can be disposed on a web.

Another textile application that uses a large quantity of polymeric resin fibers is the production of carpet. Carpet may be made using yarn comprised of polypropylene, polyester, nylon, or a combination thereof, for example. The yarn may be formed from bulk continuous filament or staple fibers. When staple fibers are used, the staple fibers may be carded to align the fibers parallel to each, thus forming large, soft, untwisted strands or ropes of fibers (i.e., slivers of fibers). The slivers may be combed and stretched using a pin-drafting machine, for instance. Then, a spinning machine may be used to stretch the sliver further and to twist the yarn to a desired size. Single strands of yarn are usually twisted with other strands of yarn to make a yarn suitable for making carpet.

Processes for making carpet generally involve weaving or stitching. Currently, most carpets are produced by stitching (i.e., tufting) using needles that punch yarn into a backing material (e.g., a pre-woven fabric) at regular intervals to form raised loops, or tufts. An adhesive may be applied to the back of the backing material to secure the tufts. The tufts may be cut, resulting in cup-pile carpet, or may be left uncut, resulting in looped-pile carpet.

The textile industry, including the carpet industry, consumes a large amount of thermoplastic polymeric resin each year, about 300 million pounds of monofilament fiber. While it is known to incorporate various mineral fillers such as calcium carbonate and kaolin during production of non-woven products and plastic products such as films and molded parts, it is not currently the general practice to include large amounts of such fillers in monofilament fibers. Previously, the cost of virgin resin was lower than the cost of concentrates composed of resins and mineral fillers and, thus, no need existed for incorporating appreciable amounts of such fillers. However, increases in resin prices have created, in many instances, a cost benefit associated with increasing the quantity of mineral fillers and decreasing the quantity of resin in many products. By incorporating at least one mineral filler, for example, calcium carbonate, the required amount of virgin resin material decreases while the end product may have comparable quality in areas including but not limited to fiber strength, texture, and appearance.

Products comprising various amounts of inorganic compounds and/or mineral fillers have been known. For example, U.S. Patent No. 6,797,377 appears to disclose non-woven webs comprising from 0.1 to 10 wt% of at least one mineral filler such as calcium carbonate, but imposes the limitation of the filler being used in conjunction with titanium dioxide in a mixture of at least two resin polymers. U.S. Patent No. 6,759,357 likewise appears to disclose fabrics comprising from 0.0015 to 0.09 wt% of at least one inorganic compound. S. Nago and Y. Mizutani, Microporous Polypropylene Fibers Containing CaCO3 Filler, 62 J. Appl. Polymer Sci. 81-86 (1996), also appears to discuss polypropylene-based non-woven fibers comprising 25 wt% calcium carbonate. WO 97/30199 may disclose fibers consisting essentially of about 0.01 to about 20 wt% inorganic particles, substantially all having a Mohs hardness of less than about 5 and at least about 90 wt% of the inorganic particles having a particle size of less than about 10 microns. However, none of these references appear to disclose reducing the impact of the filler on the properties of the final fibers at least through changes to the particle size of the coated ground calcium carbonate by its average particle size and/or by its top cut. US 2007/122614 discloses bicomponent fibers including a first polymer and a composite, wherein the composite forms a layer which forms at least a portion of the fiber's surface. The composite is formed by a second polymer and a filler.

A need exists for fibers comprising larger quantities of at least one filler, such as calcium carbonate, without a loss of desirable physical and/or chemical properties associated with fibers with lower quantities or no quantity of fillers. A need further exists for monofilament fibers comprising larger quantities of at least one filler, such as calcium carbonate, without a loss of desirable physical and/or chemical properties associated with monofilament fibers with lower quantities or no quantity of fillers that have at least one additional polymer beyond a primary polymeric resin.

### SUMMARY

The present invention is defined in and by the appended claims. The present disclosure generally describes fibers, such as staple fibers, comprising at least one polymeric resin and at least one filler having an average particle size less than or equal to about 3 microns. In one embodiment, the staple fibers comprise at least one polymeric resin, such as polypropylene, and at least one filler, such as surface-treated ground calcium carbonate (GCC). Particular embodiments of the fibers can be converted into carded webs or used in carpet with little or no added rayon or titania to produce fibrous webs or carpet possessing physical properties equal to or better than similar fibers or carpet containing rayon. Certain embodiments of the webs can be formed into fabrics to produce various useful articles, such as baby wipes, surgical gowns, and surface cleaning cloths (wet or dry).

The present disclosure also describes a process for producing staple fibers, the process comprises (a) mixing at least one polymeric resin with at least one coated ground calcium carbonate having an average particle size of less than or equal to about 3 microns; (b) heating the mixture to at least the softening point of the at least one polymeric resin; (c) extruding the mixture to form monofilament fibers; and (d) converting the monofilament fibers into staple fibers.

The present disclosure also describes a carpet comprising a plurality of fibers including at least one polymeric resin and at least one coated filler, wherein the at least one coated filler has an average particle size of less than or equal to about 10 microns. Each of the fibers are adjoined to another of the fibers, a backing material, or both.

It is to be understood that both the foregoing general description and the following detailed description are exemplary and explanatory only and are not restrictive of the invention, as claimed.

The accompanying drawings, which are incorporated in and constitute a part of this specification, illustrate exemplary embodiments of the invention and together with the description, may serve to explain some exemplary principles of the invention.

### BRIEF DESCRIPTION OF THE FIGURES

Figure 1 is a graph showing the maximum force applied to each of the particular embodiments of the monofilament fiber before the fiber would break ("max load") for each percentage of stearic acid coated ground calcium carbonate in the fiber.
Figure 2 is a graph showing the percent elongation of particular embodiments of the monofilament fibers for each percentage of stearic acid coated ground calcium carbonate in the fiber.
Figure 3 is a graph showing the tenacity of particular embodiments of the monofilament fibers for each percentage of stearic acid coated ground calcium carbonate in the fiber.
Figure 4 is a schematic diagram of an exemplary arrangement for making hydro-entangled multifilament webs of staple fibers.
Figure 5 is a graph showing the stress-strain curves for particular embodiments of filled and unfilled multifilament fibers.
Figure 6 is a graph showing the maximum machine direction force applied to various embodiments of filled and unfilled spunlaced fabrics before the fabrics would break ("max load").
Figure 7 is a graph showing the maximum cross direction force applied to various embodiments of filled and unfilled spunlaced fabrics before the fabrics would break ("max load").
Figure 8 is a graph showing the opacity for various embodiments of filled and unfilled spunlaced fabrics.
Figures 9A and 9B are graphs showing the results of color testing on carpet made in accordance with embodiments of the present invention, as described in Example 5.

### DETAILED DESCRIPTION OF EXEMPLARY EMBODIMENTS

### Exemplary Fibers

It has been surprisingly and unexpectedly found that varying the particle size of at least one filler in polymeric fibers, such as decreasing the particle size below about 10 microns (i.e., a top cut of less than or equal to 10 microns) and/or decreasing the average particle size to 3 microns or less, allows the polymeric fibers to retain or improve desirable properties (e.g., maximum loading, elongation at break, and/or tenacity) while increasing the overall quantity (measured as wt%) of filler in the fiber.

As used herein, the term "fiber" includes not only conventional single fibers and filaments (such as staple fibers and monofilament fibers), but also yarns made from a multiplicity of these fibers. In general, yarns are utilized in the manufacture of apparel, fabrics, textiles (e.g., carpet) and the like. Thus, the characteristics disclosed herein for various embodiments of fibers serve as disclosures of the characteristics of certain embodiments of staple fibers and monofilament fibers, among other types of fibers. According to particular embodiments, fibers and yarns may be made into fabrics using any methods currently used or hereafter discovered for making fibers and yarns into fabrics, including but not limited to weaving and knitting. In certain embodiments, staple fibers can also be made into non-woven webs and fabrics using any methods currently used or hereafter discovered, including spunlacing, needle-punching, thermal bonding, and card-and-bind processing.

As used herein, "staple fibers" refer to discrete fibers having a particular length. For example, the staple fibers may have a length ranging from about 25 mm to about 150 mm. In other instances, the staple fiber may have a length ranging from about 35 mm to about 100 mm. In still other instances, the staple fiber may have a length ranging from about 50 mm to about 75 mm. As used herein, "monofilament fibers" refers to a single strand of material which may contain one large fiber or many smaller fibers intertwined together. In some embodiments, the monofilament fiber may be an untwisted fiber.

According to particular embodiments, the fiber including at least one polymeric resin and at least one coated filler has a first maximum load equal to or greater than a second maximum load of a second fiber including the at least one polymeric resin, but which is devoid of the at least one coated filler. The maximum load for a given fiber will depend upon composition, size, and process variables such as percent draw. In the case of 2 denier (0.22 mg per m) polypropylene fibers, in certain embodiments, the fiber has a maximum load ranging from about 2 lbf (8.90 N) to about 20 Ibf (88.96 N). In other embodiments, the fiber has a maximum load ranging from about 5 Ibf (22.24 N) to about 15 Ibf (66.72 N). In still other embodiments, the fiber has a maximum load ranging from about 7 Ibf (31.14 N) to about 10 Ibf (44.48 N).

According to particular embodiments, the fiber including at least one polymeric resin and at least one coated filler has a first elongation at break equal to or greater than a second elongation break of a second fiber including the at least one polymeric resin, but which is devoid of the at least one coated filler. The elongation to break depends primarily on the amount of draw during production. Comparing elongation to break results on fibers produced using the same process conditions illustrates the values decrease only slightly with the addition of filler. In certain embodiments, the fiber containing 10 percent calcium carbonate has a decrease in elongation at break ranging from about 0% to about 50%. In other embodiments, the fiber has a decrease in elongation at break ranging from about 0% to about 25%. In still other embodiments, the fiber has a decrease in elongation at break ranging from about 0% to about 10%.

According to particular embodiments, the fiber including at least one polymeric resin and at least one coated filler has a first tenacity equal to or greater than a second tenacity of a second fiber including the at least one polymeric resin, but which is devoid of the at least one coated filler. Tenacity indicates the load to break a fiber or fibers normalized for the fiber diameters. The tenacity for a given fiber can depend upon composition, size, and process variables such as percent draw. For example, in the case of 2 denier (0.22 mg per m) polypropylene fibers, the fiber can have a first tenacity ranging from about 2 grams/denier (2 g per 0.11 mg per m) to about 10 grams/denier (10 g per 0.11 mg per m). In other embodiments, the fiber can have a first tenacity ranging from about 3 grams/denier (3 g per 0.11 mg per m) to about 8 grams/denier (8 g per 0.11 mg per m). In still other embodiments, the fiber has a first tenacity ranging from about 4 grams/denier (4 g per 0.11 mg per m) to about 7 grams/denier (7 g per 0.11 mg per m).

### Exemplary Polymeric Resins

The fibers disclosed herein comprise at least one polymeric resin. The skilled artisan will readily understand appropriate polymeric resins for use in embodiments of the described inventions. In one embodiment, the at least one polymeric resin is chosen from conventional polymeric resins that provide the properties desired for any particular staple fiber, yarn, woven product, non-woven product, or application. In another embodiment, the at least one polymeric resin is chosen from thermoplastic polymers, including but not limited to: polyolefins, such as polypropylene and polyethylene homopolymers and copolymers, including copolymers with 1-butene, 4-methyl-1-pentene, and 1-hexane; polyamides, such as nylon; polyesters; and copolymers of any of the above-mentioned polymers. In yet another embodiment, the monofilament fibers consist essentially of a polymeric resin, such as polypropylene, and a filler, such as coated GCC.

In one embodiment, the at least one polymeric resin is an isotropic semi-crystalline polymer. In one embodiment, the isotropic semi-crystalline polymer is melt-processable, melting in a temperature range that makes it possible to spin the polymer into fibers in the melt phase without significant decomposition. Exemplary isotropic semi-crystalline polymers include, but are not limited to, poly(alkylene terephthalates); poly(alkylene naphthalates); poly(arylene sulfides); aliphatic and aliphatic-aromatic polyamides; polyesters comprising monomer units derived from cyclohexanedimethanol and terephthalic acid; poly(ethylene terephthalate); poly(butylene terephthalate); poly(ethylene naphthalate); poly(phenylene sulfide); and poly(1,4-cyclohexanedimethanol terephthalate), wherein the 1,4-cyclohexanedimethanol is a mixture of *cis*- and *trans-* isomers, nylon-6, and nylon-66. In another embodiment, the at least one polymeric resin is a semi-crystalline polymer polyolefin, including but not limited to polyethylene and polypropylene. In a further embodiment, the at least one polymeric resin is an extended chain polyethylene having a high tensile modulus, made by the gel spinning or the melt spinning of very or ultrahigh molecular weight polyethylene.

Isotropic polymers that may not be processable in a melt may also be used as the at least one polymeric resin in embodiments of the present inventions. In one embodiment, the isotropic polymer is rayon. In another embodiment, the isotropic polymer is cellulose acetate. In a further embodiment, the isotropic polymer is polybenzimidazole, poly[2,2'-(m-phenylene)-5,5'-bibenzimidazole]. In one embodiment, the isotropic polymers are dry spun using acetone as a solvent. In another embodiment, poly [2,2'-(m-phenylene)-5,5'-bibenzimidazole] is wet spun using N,N'-dimethylacetamide as a solvent. In yet another embodiment, the isotropic polymers are aromatic polyamides other than the polymer of terephthalic acid and p-phenylene diamine (e.g., polymers of terephthalic acid and one or more aromatic diamines) that are soluble in polar aprotic solvents, including but not limited to N-methylpyrrolidinone, that are wet spun with added particles to yield fibers such as monofilament fibers. In a further embodiment, amorphous, non-crystalline, isotropic polymers, including but not limited to the copolymer of isophthalic acid, terephthalic acid and bisphenol A (polyarylate), may also be filled (i.e., include a filler) and utilized in the present inventions.

In another embodiment, the at least one polymeric resin is made from a liquid crystalline polymer (LCP). In certain embodiments, LCPs produce fibers with high tensile strength and/or modulus. In one embodiment, the liquid crystalline polymer is processable in a melt (i.e., thermotropic). In another embodiment, the liquid crystalline polymer cannot be processed in a melt. In a further embodiment, liquid crystalline polymers are used that exhibit liquid crystalline behavior in solution, are blended with a hard filler, and then wet or dry spun to yield monofilament fibers. In yet another embodiment, the aromatic polyamide made from p-phenylenediamine and terephthalic acid (including, but not limited to, polymers sold under the KEVLAR trademark) can be filled and wet spun (e.g., by dry-jet wet-spinning from a concentrated sulfuric acid solution) to yield fibers such as monofilament fibers or staple fibers. In yet a further embodiment, the liquid crystalline polymer is any aromatic polyamide that is soluble in polar aprotic solvents, including but not limited to N-methylpyrrolidinone, and that can be spun into monofilament fibers or staple fibers. In still another embodiment, the liquid crystalline polymer is not liquid crystalline under some or all of a given condition or set of conditions, but still yields high modulus fibers. In still a further embodiment, the liquid crystalline polymer exhibits lyotropic liquid crystalline phases at some concentrations and in some solvents, but isotropic solutions at other concentrations and/or in other solvents.

In one embodiment, the liquid crystalline polymers (LCPs) for use in this invention are thermotropic LCPs. Exemplary thermotropic LCPs include, but are not limited to, aromatic polyesters, aliphatic-aromatic polyesters, aromatic poly(esteramides), aliphatic-aromatic poly(esteramides), aromatic poly(esterimides), aromatic poly(estercarbonates), aromatic polyamides, aliphatic-aromatic polyamides and poly(azomethines). In one embodiment, the thermotropic LCPs are aromatic polyesters and poly(esteramides) that form liquid crystalline melt phases at temperatures less than about 360 °C and include one or more monomer units derived from the group consisting of terephthalic acid, isophthalic acid, 1,4-hydroquinone, resorcinol, 4,4'-dihydroxybiphenyl, 4,4'-biphenyldicarboxylic acid, 4-hydroxybenzoic acid, 6-hydroxy-2-naphthoic acid, 2,6-naphthalenedicarboxylic acid, 2,6-dihydroxynaphthalene, 4-aminophenol, and 4-aminobenzoic acid. In one embodiment the aromatic groups include substituents which do not react under the conditions of the polymerization, such as lower alkyl groups having 1-4 carbons, aromatic groups, F, Cl, Br, and I. The synthesis and structure of some typical, aromatic polyesters are taught in U.S. Pat. Nos. 4,473,682; 4,522,974; 4,375,530; 4,318,841; 4,256,624; 4,161,470; 4,219,461; 4,083,829; 4,184,996; 4,279,803; 4,337,190; 4,355,134; 4,429,105; 4,393,191; and 4,421,908. The synthesis and structures of some typical aromatic poly(esteramides) are taught in U.S. Pat. Nos. 4,339,375; 4,355,132; 4,351,917; 4,330,457; 4,351,918; and 5,204,443. Potentially useful aromatic liquid crystalline polyesters and poly(esteramides) may be those available from Hoechst Celanese Corporation under the VECTRA trademark, as well as from other manufacturers.

In yet another embodiment, the LCPs have monomer repeat units derived from 4-hydroxybenzoic acid and 6-hydroxy-2-naphthoic acid, as taught in U.S. Pat. No. 4,161,470. In one embodiment, the monomer units derived from 4-hydroxybenzoic acid comprise about 15% to about 85% of the polymer on a mole basis, and monomer units derived from 6-hydroxy-2-naphthoic acid comprise about 85% to about 15% of the polymer on a mole basis. In another embodiment, the polymer comprises about 73% monomer units derived from 4-hydroxybenzoic acid and about 27% monomer units derived from 6-hydroxy-2-naphthoic acid, on a mole basis. Such a polymer is available in fiber form under the VECTRAN trademark from Hoechst Celanese Corporation, Charlotte, N.C.

In still a further embodiment, the LCPs or poly(esteramides) comprise the above recited monomer units derived from 6-hydroxy-2-naphthoic acid and 4-hydroxybenzoic acid, as well as monomer units derived from one or more of the following monomers: 4,4'-dihydroxybiphenyl, terephthalic acid, and 4-aminophenol. In yet another embodiment, the polyester comprising these monomer units is derived from 4-hydroxybenzoic acid, 6-hydroxy-2-naphthoic acid, 4,4'-biphenol, and terephthalic acid, as taught in U.S. Pat. No. 4,473,682, with the polymer comprising these monomer units in a mole ratio of about 60:4:18:18. In another embodiment, the poly(esteramide) comprises monomer units derived from 4-hydroxybenzoic acid, 6-hydroxy-2-naphthoic acid, terephthalic acid, 4,4'-biphenol, and 4-aminophenol, as taught in U.S. Pat. No. 5,204,443. In yet another embodiment, the composition comprises these monomer units in a mole ratio of about 60:3.5:18.25:13.25:5.

In one embodiment, the at least one polymeric resin is a suitable commercial polymeric resin product. Exemplary commercial products suitable as the at least one polymeric resin include, but are not limited to: Basell Pro-fax 6323 polypropylene resin, a general purpose homopolymer with a density of about 0.9 g/cm³ and a melt flow index of about 12.0 g/10 min, available from LyondellBasell Industries; Exxon 3155, a polypropylene homopolymer having a melt flow rate of about 30 g/10 min, available from Exxon Mobil Corporation; PF 305, a polypropylene homopolymer having a melt flow rate of about 38 g/10 min, available from Montell USA; ESD47, a polypropylene homopolymer having a melt flow rate of about 38 g/10 min, available from Union Carbide; and 6D43, a polypropylene-polyethylene copolymer having a melt flow rate of about 35 g/10 min, available from Union Carbide.

In certain embodiments, the at least one polymeric resin may be present in the monofilament fibers of the present disclosure in an amount of greater than or equal to about 50 wt%, relative to the total weight of the fibers. In one embodiment, the at least one polymeric resin is present in the fibers in an amount ranging from about 50 to about 90 wt%. In another embodiment, the at least one polymeric resin is present in the fibers in an amount ranging from about 75 to about 90 wt%.

### Exemplary Fillers

The fibers comprise at least one filler. The skilled artisan will readily understand appropriate fillers for use in embodiments of the inventions described herein. In one embodiment, the at least one filler may be a mineral-based substrate capable of being coated, mixed with at least one polymeric resin, and extruded. The at least one filler is coated ground calcium carbonate. Coated ground calcium carbonate is a filler commonly used in the formation of various polymeric products.

Exemplary coated ground calcium carbonate products suitable for use as an at least one filler include, but are not limited to, those commercially available. In one embodiment, the coated ground calcium carbonate is chosen from those products sold under the name FiberLink^{™} by Imerys, Inc. In another embodiment, the coated ground calcium carbonate is the product sold under the name MAGNUM GLOSS^{®} by the Mississippi Lime Company. In a further embodiment, the coated ground calcium carbonate is the product sold under the name ALBAGLOS^{®} by Specialty Minerals, Inc. In yet another embodiment, the coated ground calcium carbonate is the product sold under the name OMYACARB^{®} by OMYA, Inc. In yet a further embodiment, the coated ground calcium carbonate is the product sold under the name HUBERCARB^{®} by Huber, Inc. In still another embodiment, the coated ground calcium carbonate is the product sold under the name FiberLink^{™} 101S by Imerys, Inc. Exemplary commercially available coated ground calcium carbonate products may be available in the form of dry powders having defined particle size ranges; however, not all commercial coated ground calcium carbonate products will exhibit a particle size and distribution appropriate for use in accordance with embodiments of the present disclosure.

In particular embodiments, the particle size of the at least one filler may affect, among other things, the maximum amount of filler effectively incorporated into the monofilament fibers disclosed herein, as well as the aesthetic properties and strength of the resulting products. In certain embodiments, the at least one filler may be used to provide preferred physical properties to fibers, for example, by increasing the strength and/or imparting desirable roughness and/or opacity to staple fibers. Such characteristics may be desirable in various commercial articles, such as, for example, hygienic products (e.g., baby wipes), surgical gowns, and cleansing products (e.g., surface cleaning cloths (wet and dry)).

In one embodiment, the at least one filler has an average particle size of about 1 micron. In yet a further embodiment, the at least one filler has an average particle size less than or equal to about 3 microns. In still another embodiment, the at least one filler has an average particle size less than or equal to about 2 microns. In still a further embodiment, the at least one filler has an average particle size less than or equal to about 1.5 microns. In another embodiment, the at least one filler has an average particle size less than or equal to about 1 micron. In yet another embodiment, the at least one filler has an average particle size ranging from about 1 micron to about 3 microns. In yet a further embodiment, the at least one filler has an average particle size ranging from about 1 micron to about 2 microns. In still another embodiment, the at least one filler has an average particle size ranging from about 0.5 microns to about 1.5 microns. Average particle size is defined herein as the d₅₀ as measured on a Microtrac^{®} 100 particle size analyzer.

The at least one filler may be characterized by a "top cut" value. As used herein, "top cut" refers to the largest particle size that can be identified in a sample of filler by a Microtrac® 100 particle size analyzer. In one embodiment, the top cut is less than about 10 microns. In a further embodiment, the top cut is less than about 8 microns. In yet another embodiment, the top cut is less than about 6 microns. In yet a further embodiment, the top cut is less than about 4 microns. In still another embodiment, the top cut ranges from about 4 microns to about 10 microns. In a further embodiment, the top cut ranges from about 4 microns to about 8 microns. In yet another embodiment, the top cut ranges from about 4 microns to about 6 microns. In still another embodiment, the top cut is less than the diameter of the fibers.

In certain embodiments, the at least one filler has a top cut less than or equal to about 65%, more preferably less than or equal to about 70%, and most preferably less than or equal to about 75%, of the fiber diameter. In other embodiments, the at least one filler has a top cut less than or equal to about 60% of the fiber diameter.

In certain embodiments, the particle size distribution of the at least one filler according to the present disclosure may be small enough so as to not significantly weaken the individual fibers and/or make the surface of the fibers abrasive, but large enough so as to create an aesthetically pleasing surface texture. In one embodiment, the particle size distribution of the at least one filler has less than about 5% of the total particles greater than about 10 microns, and less than about 5% of the total particles less than about 0.5 microns. In some embodiments, particles above about 10 microns may tend to weaken the structure, and particles less than about 0.5 microns may tend to form agglomerates, leading to formation of structures greater than about 10 microns.

The at least one filler is coated with at least one organic material chosen from fatty acids, including but not limited to stearic acid, and salts and esters thereof, such as stearate. In another embodiment, the at least one organic material is ammonium stearate. In a further embodiment, the at least one organic material is calcium stearate. The products sold under the tradename FiberLink^{™} by Imerys, Inc., are non-limiting examples of ground calcium carbonate products coated with stearic acid.

Surface coating the at least one filler with at least one organic material may, in some embodiments, serve to improve dispersion of the at least one filler particles throughout the fiber and/or facilitate the overall production of the fibers. For example, the addition of uncoated ground calcium carbonate to at least one polymeric resin, as opposed to coated ground calcium carbonate, may result in fibers having uncoated ground calcium carbonate particles located on the outside of the fibers, which may be problematic because uncoated particles located on the outside of the fibers may cause inorganic deposits to attach to metal components of the spinneret die holes and clog the exit holes, thus preventing the fibers from extruding properly.

In some embodiments, the amount of the at least one filler may negatively impact the strength and/or surface texture of the monofilaments fibers if it exceeds a certain value. The at least one filler is present in an amount less than about 50 wt%, relative to the total weight of the fibers. In one embodiment, the at least one filler is present in an amount less than about 25 wt%. In a further embodiment, the at least one filler is present in an amount less than about 20 wt%. In yet another embodiment, the at least one filler is present in an amount less than about 15 wt%. In yet a further embodiment, the at least one filler is present in an amount less than about 10 wt%. In yet still another embodiment, the at least one filler is present in an amount ranging from about 5 wt% to about 40 wt%. In still another embodiment, the at least one filler is present in an amount ranging from about 10 wt% to about 20 wt%. In still another embodiment, the at least one filler is present in an amount ranging from about 10 wt% to about 15 wt%. In yet another embodiment, the at least one filler is present in an amount from about 10 wt% to about 25 wt% when the at least one filler has an average particle size of less than about 3 microns and/or a top cut of less than about 10 microns.

### Optional Exemplary Additives

In addition to the at least one polymeric resin and the at least one filler, embodiments of the fibers may further comprise at least one additive. The at least one additive may be chosen from those now known in the art or those hereafter discovered. In one embodiment, the at least one additive is chosen from additional mineral fillers, including but not limited to, talc, gypsum, diatomaceous earth, kaolin, attapulgite, bentonite, montmorillonite, and other natural or synthetic clays. In another embodiment, the at least one additive is chosen from inorganic compounds, including but not limited to silica, alumina, magnesium oxide, zinc oxide, calcium oxide, and barium sulfate. In a further embodiment, the at least one additive is chosen from one of the group consisting of: optical brighteners; heat stabilizers; antioxidants; antistatic agents; anti-blocking agents; dyestuffs; pigments, including but not limited to titanium dioxide; luster improving agents; surfactants; natural oils; and synthetic oils.

### Exemplary Processes for Producing Fibers

In certain embodiments, fibers, as discussed herein, may be produced according to any appropriate process or processes now known to the skilled artisan or hereafter discovered, that result in the production of a fiber comprising at least one polymeric resin and at least one filler. Exemplary techniques include, but are not limited to, dry spinning, wet spinning, spun-bonding, flash-spinning, needle-punching, meltblowing, and water-punching processes. One particular exemplary process for producing fibers is melt spinning, which may employ an extrusion process to provide molten polymer mixtures to spinneret dies. In one embodiment, melt spinning may be accomplished using DuPont fiber spinning equipment, such as that available at the time this application was filed at Clemson University in Clemson, South Carolina, USA.

In one embodiment, the process for producing fibers used in the present invention comprises heating the at least one polymeric resin to at least about its softening point. In another embodiment, the process comprises heating the at least one polymeric resin to any temperature suitable for the extrusion of the at least one polymeric resin. In a further embodiment, the at least one polymeric resin is heated to a temperature ranging from about 225 °C to about 260 °C.

In particular embodiments, the at least one filler may be incorporated into the at least one polymeric resin using any method conventionally known in the art or hereafter discovered. For example, the at least one filler may be added to the at least one polymeric resin during any step prior to extrusion, for example, during or prior to the heating step. In another embodiment, a "masterbatch" of at least one polymeric resin and the at least one filler may be premixed, optionally formed into granulates or pellets, and mixed with at least one additional virgin polymeric resin before extrusion of the fibers. As used herein, "masterbatch" refers to mixture, dispersion, or suspension of components, such as a filler, and a polymeric resin. In some embodiments, the at least one additional virgin polymeric resin may be the same or different from the at least one polymeric resin used to make the masterbatch. In certain embodiments, the masterbatch comprises a higher concentration of the at least one filler, for instance, a concentration ranging from about 20 wt% to about 75 wt%, than is desired in the fiber, and may be mixed with the at least one additional polymeric resin in an amount suitable to obtain the desired concentration of at least one filler in the fiber. In one embodiment, the concentration of the at least one filler in the masterbatch is about 20 wt% to about 75 wt%. In another embodiment, the concentration of the at least one filler in the masterbatch is about 20 wt% to about 50 wt%. For example, a masterbatch comprising 50 wt% coated ground calcium carbonate may be mixed with an equal amount of at least one virgin polymeric resin to produce a final product comprising 25 wt% coated ground calcium carbonate. In some embodiments, the masterbatch may be mixed and pelletized using any apparatus known in the art or hereafter discovered, for example, a ZSK 30 Twin Extruder may be used to mix and extrude the coated ground calcium carbonate and at least one polymer resin masterbatch, and a Cumberland pelletizer may be used to optionally form the masterbatch into pellets.

According to particular embodiments, once the at least one filler or masterbatch is mixed with the at least one polymeric resin, the mixture may be extruded continuously through at least one spinneret to produce long filaments. In certain embodiments, the extrusion rate may vary according to the desired application, and appropriate extrusion rates will be known to the skilled artisan.

In particular embodiments, the extrusion temperature may also vary depending on the desired application and process. In one embodiment, the extrusion temperature ranges from about 225 °C to about 260 °C. In another embodiment, the extrusion temperature ranges from about 235 °C to about 245 °C. In certain embodiments, the extrusion apparatus may be chosen from those conventionally used now or hereafter discovered in the art. In one embodiment, the extrusion apparatus is an Alex James 0.75 inch (1.91 cm) single screw extruder with a 0.297 cc/rev metering pump. In some embodiments, the at least one spinneret may be chosen from those conventionally used now or hereafter discovered in the art. In one embodiment, the at least one spinneret contains 10 holes, each about 0.022 inches (0.56 cm) in diameter.

According to particular embodiments, after extrusion, the fibers may be attenuated. In one embodiment, the fibers are attenuated by high-speed drawing, in which the multi-strand filament is drawn out on rollers such that the wind speed is about 1000 meters per minute.

According to some embodiments, monofilament fibers may be made by melt spinning, dry spinning, or wet spinning. In particular embodiments, monofilament fibers may be produced by spinning a polymeric resin into the shape of a fiber by heating the resin at least to its softening temperature and extruding the resin through a spinneret to form monofilament fibers. In other embodiments, monofilament fibers may also be produced by extruding the resin and attenuating the streams of resin by hot air to form fibers with a fine diameter. In one embodiment, a method for producing monofilament fibers comprises adding at least one filler to at least one polymeric resin and extruding the resulting mixture, wherein the at least one filler is present in the final product in an amount of less than or equal to about 50% by weight. In alternate embodiments, monofilament fibers may be produced according to any appropriate process or processes now known to the skilled artisan or hereafter discovered, that result in the production of a continuous monofilament fiber comprising at least one polymeric resin and at least one filler.

According to certain embodiments, the fibers may be produced to have a desired size. Those of ordinary skill in the art will know appropriate sizes of the fibers for the desired or intended application, and processes for measuring them. In one embodiment, the fibers range in size from about 0.1 denier (0.011 mg per m) to about 120 denier (13.32 mg per m). In another embodiment, the fibers range in size from about 1 denier (0.11 mg per m) to about 100 denier (11.11 mg per m). In a further embodiment, the fibers range in size from about 0.5 (0.056 mg per m) to about 5 denier (0.56 mg per m). In yet another embodiment, the fibers are about 100 denier (11.11 mg per m) in size

According to particular embodiments, monofilament fibers can be processed further using conventional techniques and equipment used in the textile art, to produce staple fibers. For example, the monofilament fibers, in extruded continuous form, can be subjected to a steamer unit for preheating. Then, in certain embodiments, the continuous monofilament fibers can have a carding finish applied, followed by a crimping step to improve their processability. In some embodiments, a cutting device can be used to deliver staple fibers having either uniform, substantially uniform, or varying lengths.

Multifilament webs can be made by, for example, introducing staple fibers to a first fiber opener, emptying them into a second fiber opener, and then sending the fibers over to cards. Subsequently, in particular embodiments, the carded web may be flowed onto a carding conveyor belt that leads to a crosslapper. In some embodiments, the crosslapper disposes many layers of thin carded webs onto a needle-punch conveyor belt moving orthogonal or perpendicular to the carding conveyor. In certain embodiments, the basis weight of this stack of webs can be controlled by adjusting the relative speeds of the two belts. In one embodiment, one or more needle-punching heads along the line can act to bond the webs, giving them integrity for further handling and processing. In an alternate embodiment, the webs can be bonded to a lesser degree, if desired, by passing them through a pre-entangler. In some embodiments, the extent of needle-punching or pre-entangling can be adjusted to produce webs having particular basis weights.

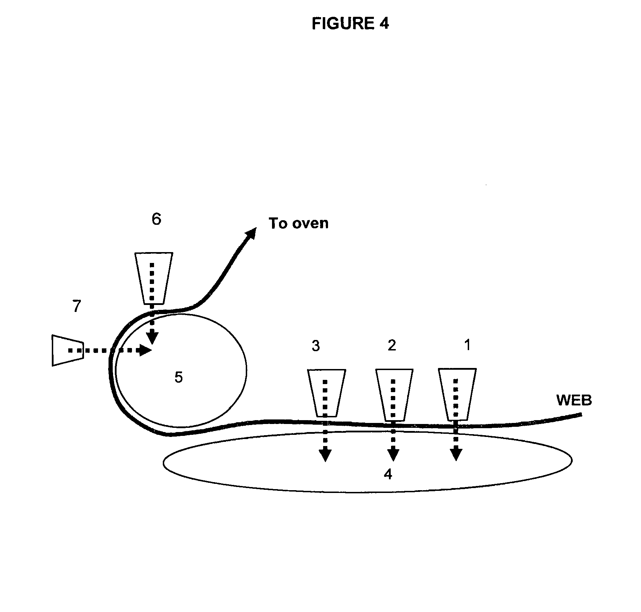

In one embodiment, the webs can be run through a hydro-entangling process. For example, with reference to Figure 4, a horizontal moving wire conveyor belt carries the webs under one or more vertical water spray heads 1, 2, 3. One or more vacuum stations 4 underneath the belt remove the water, causing the fibers to become entangled. The process additionally can include equipment along the line adapted for providing improved bonding of the fibers and delivering a substantially uniform appearance on both sides of the webs. In particular embodiments, this improved bonding can be achieved through a method referred to as "back side entangling," where the webs are passed over a porous roll 5 that applies a vacuum while water spray heads 6, 7 spray the back side of the webs, before they pass into a drying oven and rewinder. Optionally, under this process for producing multifilament webs, the addition of chemical binders advantageously may be avoided, and the fibers do not need to be melted.

### Exemplary Carpets

According to yet another aspect of the present invention, carpet comprising a plurality of fibers including at least one coated filler and a polymeric resin are provided. In some embodiments, the plurality of fibers may comprise the fibers described herein. In one embodiment, the fibers or yarns of the carpet may include staple fibers. In particular embodiments, addition of a filler to the carpet fibers as disclosed herein reduces the amount of resin required to produce the carpet while still maintaining the wear and strength properties of the carpet fibers, which can provide advantageous economic benefits. Moreover, in some embodiments, other properties, such as gloss and/or electrostatic propensity desirably may be improved as compared to carpets comprising polymeric resin fibers that do not include coated fillers.

In some embodiments, the carpet may comprise woven or stitched fibers or yarn. For example, the carpet may comprise yarns woven together such that each of the yarns are adjoined to at least another of the yarns. In one embodiment, the carpet may include twisted yarn. In other embodiments, the carpet may be cut pile carpet or uncut pile carpet.

In certain embodiments, the carpet comprises yarn having a size ranging from 5 denier (0.56 mg per m) to about 50 denier (5.56 mg per m). In other embodiments, the carpet comprises yarn having a size ranging from 10 denier (1.11 mg per m) to about 40 denier (4.44 mg per m). In still other embodiments, the carpet comprises yarn having a size ranging from 15 denier (1.67 mg per m) to about 30 denier (3.33 mg per m).

In particular embodiments, the carpet may be stitched into a backing material or backing fabric. Suitable backing materials for use in embodiments of the carpet include, but are not limited to, woven polypropylene slit film and nonwoven polyester fabric.

In alternate embodiments, the carpet may include additive materials, such as synthetic SBR latex foam and polyvinyl chloride.

In certain embodiments, the carpet has a 60 degree gloss ranging from about 0 to about 10. In other embodiments, the carpet has a 60 degree gloss ranging from about 0 to about 5. In still other embodiments, the carpet has a 60 degree gloss ranging from about 0 to about 2.5.

In particular embodiments, the carpet has an electrostatic propensity ranging from about 0 kVto about 3 kV. In other embodiments, the carpet has an electrostatic propensity ranging from about 0 kV to about 0.5 kV. In still other embodiments, the carpet has an electrostatic propensity ranging from about 0 kV to about 0.1 kV.

In some embodiments, the carpet has a turf bind ranging from about 0 lbs (0 kg) to about 12 lbs (5.44 kg). In other embodiments, the carpet has a turf bind ranging from about 4 lbs (1.81 kg) to about 10 lbs (4.54 kg). In still other embodiments, the carpet has a turf bind ranging from about 6 lbs (2.72 kg) to about 8 lbs (3.63 kg).

In certain embodiments, the carpet has a first opacity equal to or greater than a second opacity of a second carpet comprising a plurality of second fibers including the at least one polymeric resin, but which is devoid of the at least one coated filler.

In certain embodiments, the carpet has a first whiteness equal to or greater than a second whiteness of a second carpet comprising a plurality of second fibers including a comparable at least one polymeric resin, but which is devoid of the at least one coated filler.

In certain embodiments, the carpet has a first brightness equal to or greater than a second brightness of a second carpet comprising a plurality of second fibers including a comparable at least one polymeric resin, but which is devoid of the at least one coated filler.

In certain embodiments, the carpet has a first yellowness equal to or less than a second yellowness of a second carpet comprising a plurality of second fibers including a comparable at least one polymeric resin, but which is devoid of the at least one coated filler.

### Exemplary Processes for Making Carpet

A process for making carpet is provided. In certain embodiments, the process for making carpet comprises providing a plurality of fibers comprising at least one polymeric resin and at least one coated filler, affixing each of the fibers to at least another of the fibers, to a backing material, or both. In some embodiments, the plurality of fibers may comprise the fibers described herein. In particular embodiments, the carpet may be produced according to any appropriate process or processes now known to the skilled artisan or hereafter discovered. Exemplary processes include tufting, weaving, knitting, and needlepunching. For instance, tufting yarn with a tufting machine first involves threading hundreds of needles with yarn, the needles being positioned in a line across the face of the machine. In some embodiments, each needle inserts the yarn into a primary backing fabric such that, below the needles, loopers catch the yarn and form individual loops. Thus, the yarn is entangled in the backing fabric so that it stays in place. In some embodiments, the process for producing carpet may start with continuous yarn or with discrete staple fibers formed into yarns.

### Testing

The fibers disclosed herein may be tested by any number of various methods and for any number of various properties, including for their individual fiber strength, elongation at break, and tenacity. Those three tests may be conducted using, for example, ASTM D3822.

The carpet disclosed herein may be tested by any number of various methods and for any number of various properties, including electrostatic propensity, pill flammability, turf bind, abrasion, and color.

The electrostatic propensity test indicates the likelihood someone will pick up a static charge while walking across the carpet wearing shoes with rubber or leather soles. Electrostatic propensity may be measured using AATCC 134 - 1996.

To measure pill flammability, a carpet sample is dried in an oven and then a flammable pill or tablet is placed in the center of the sheet and allowed to burn for 2 minutes. A passing grade means the flame did not spread more than 3 inches (7.62 cm) in any direction. Pill flammability may be measured using ASTM D2859-06.

The turf bind test measures the force necessary to pull the carpet fibers out of the backing. Turf bind may be measured using ASTM D1335.

Abrasion resistance may be measured using ASTM D3884 (Abrasion Wheels -H-18 with 1000 grams load).

Color testing may be performed using the method of ASTM D2244.

If not otherwise specified, the percentage values disclosed herein refer to weight percent (%).

Other than in the examples, or where otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the specification and attached claims are approximations that may vary depending upon the desired properties sought to be obtained by the present disclosure. At the very least, and not as an attempt to limit the application of the doctrine of equivalents to the scope of the claims, each numerical parameter should be construed in light of the number of significant digits and ordinary rounding approaches.

Notwithstanding that the numerical ranges and parameters setting forth the broad scope of the invention are approximations, unless otherwise indicated the numerical values set forth in the specific examples are reported as precisely as possible. Any numerical value, however, inherently contains certain errors resulting from the standard deviation found in the respective testing measurements.

The headers used in this specification are presented for the convenience of the reader and not intended limit the inventions described herein. By way of non-limiting illustration, examples of certain embodiments of the present disclosure are given below.

### EXAMPLES

### Example 1 (Comparative)

The at least one filler in this example was a low solids processed, uncoated ground calcium carbonate (Supermite^{®}, Imerys, Inc.) with an average particle size of about 1.5 microns and a top cut of about 10 microns. The filler was compounded at various weight percentages with Basell Profax 6323 polypropylene resin, a general purpose homopolymer with a density of 0.9 g/cm³ and a melt flow index of 12.0 g/10 min. Monofilament fibers were produced, when possible, using a standard melt fiber spinning process. At 5% loadings, the uncoated product experienced immediate processing problems where even 4 denier (0.44 mg per m) fibers could not be produced, even at low line speeds, without fiber breaks. This trial was not conducted long enough for the powder to plate out and clog the spinneret holes, but previous evaluations indicate it would have happened.

### Example 2

This example used as the at least one filler a low solids processed, stearic acid coated calcium carbonate with an average particle size of 1.5 micron and a top cut of 8 microns, sold by Imerys, Inc. under the trade name FiberLink™ 101S. The stearic acid target was about 1% by weight. The virgin resin was a 12 MFI homopolymer polypropylene supplied by Atofina.

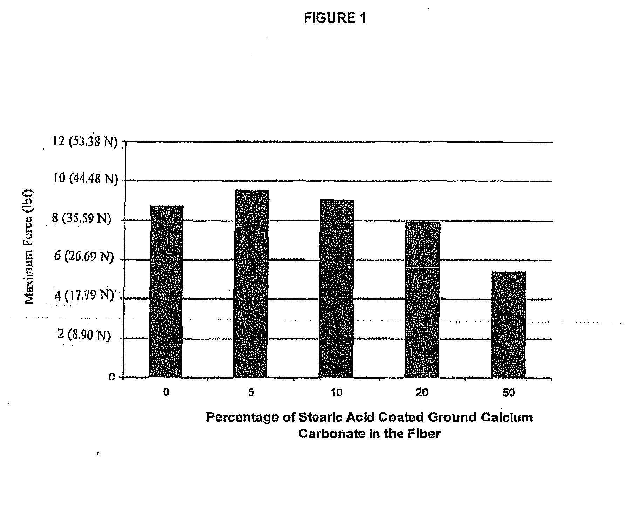

Fibers were extruded using a 10 hole die, which means that there were actually 10 fibers intertwined together. Tests of the resulting fibers were conducted using ASTM D3822y conditions at additive loadings of about 0%, about 5%, about 10%, about 20%, and about 50%. Continuous fibers were produced at target sizes of 4, 3, and 2 denier (0.44, 0.33 and 0.22 mg per m respectively), using the same standard melt fiber spinning process as in Example 1. Prototypes containing about 50% additive loadings could not be produced at 2 denier (0.22 mg per m). The strength properties of 3 denier (0.33 mg per m) monofilament fibers are shown in Figures 1, 2, and 3 and summarized below in Table 1.

**Table 1**

| **Coated Ground Calcium** | **Maximum Load** | | **Elongation at Break (%)** | **Tenacity (g/den (g/0.11 mg per m))** |
|---|---|---|---|---|
| **Carbonate in the Fiber (%)** | **(Ibf)** | **(N)** | | |
| **0%** | 8.74 | 38.88 | 370 | 2.91 |
| **5%** | 9.55 | 42.48 | 352 | 3.18 |
| **10%** | 9.04 | 40.21 | 308 | 3.01 |
| **20%** | 7.96 | 35.41 | 188 | 2.65 |
| **50%** | 5.40 | 24.02 | 127 | 1.80 |

The individual fiber strength (maximum load) shown in Table 1 and Figure 1 was reasonably level for percentages of stearic acid coated ground calcium carbonate in the fiber up to about 20%. The results at 50% were lower, but the 3 denier (0.33 mg per m) fibers could still be produced at over 1000 meters per minute.

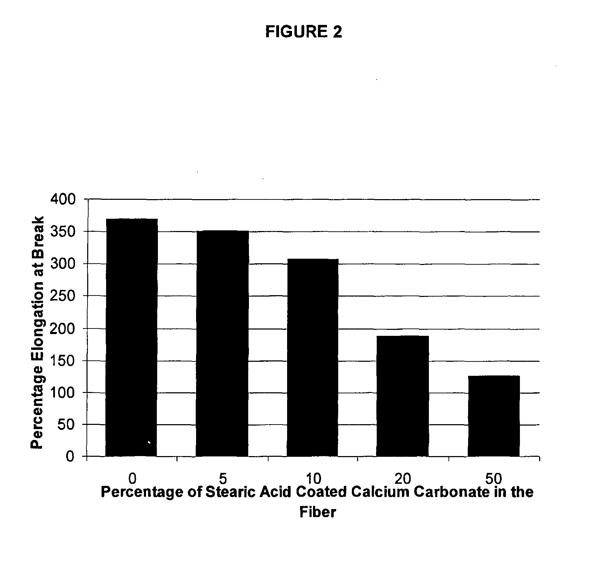

When measuring the elongation at the break for the individual fibers, the cold fibers were stretched and the results are shown in Table 1 and Figure 2. For 3 denier (0.33 mg per m) fibers, a sharp decrease elongation at break occurred between about 10% and about 20% of stearic acid coated ground calcium carbonate in the fibers.

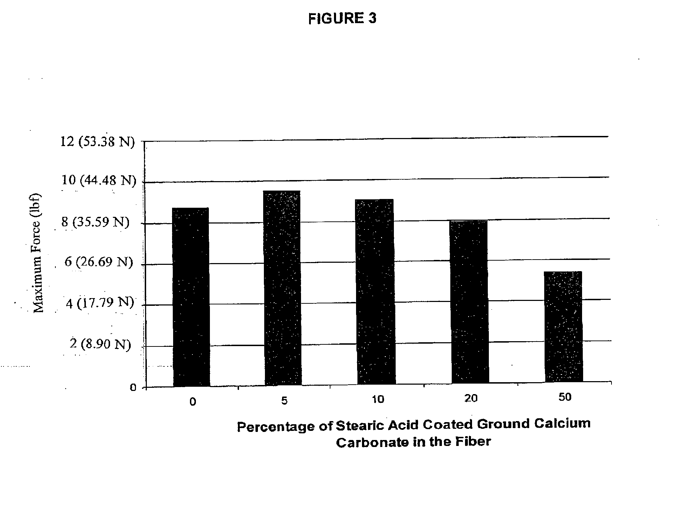

The individual fiber tenacity shown in Table 1 and Figure 3 was reasonably consistent over the range of about 0% to about 20% of stearic acid coated ground calcium carbonate in the fiber.

The above data illustrates that addition of small amounts of filler does not significantly decrease the fiber strength. Results with 2 and 4 denier (0.22 and 0.44 mg per m) fibers illustrated similar trends that were overall not inconsistent with those of Table 1 and Figure 1-3.

### Example 3

The material produced in this example was polypropylene staple fibers, filled and unfilled, made into carded webs with and without rayon fibers. The target size was the same for each fiber type. The polypropylene fibers were formed on a fiber spinning line. The same spinning finish was applied to all of the fibers produced. The unfilled fibers were produced using 100% PP resin with a target denier of 1.5 (0.17 mg per m) and a cut length of 34 mm. The filled fibers were produced using 71.4% virgin PP resin blended with 28.6% Marx 09-006, a Washington Penn product consisting of 70% FiberLink^{™} 101S (Imerys, Inc.) and 30% Exxon 3145 PP resin, yielding finished fibers containing 80% PP and 20% calcium carbonate. The rayon fibers, obtained from National Spinning, had a target denier of 1.2 (0.13 mg per m) and a staple length of 1.5 inches (3.81 cm).

The unfilled PP staple fiber webs were made by introducing 25 pounds (11.34 kg) of unfilled PP staple fibers to the first fiber opener, which in turn emptied into a second opener, before sending the fibers to the cards. The carded web flowed onto a conveyor belt and was directed to crosslapper. The web passed through a pre-entangler to keep the web sufficiently bound to be wound onto a core for running through the hydro-entangler. This web was adjusted to yield a 55 gsm basis weight at the conveyor belt at the position after the second needle punch station, and was passed through the hydro-entangler.

Three more webs of staple fibers were produced in the same manner. Two webs contained 40% rayon fibers. For those webs, 15 pounds (6.80 kg) of staple fibers were mixed with 10 pounds (4.54 kg) of rayon fibers in the first opener. The opener exit was closed for the first 30 minutes so that the opened fibers blew back onto the conveyor belt rather than being directed to the second opener. The additional time in the first opener enhanced the blending of the PP and rayon fibers. The fourth web of staple fibers contained no rayon fibers and thus was not exposed to additional opening time. This web was composed of 80% PP and 20% CaCO₃ (FiberLink^{™} 101S, Imerys, Inc.) by weight.

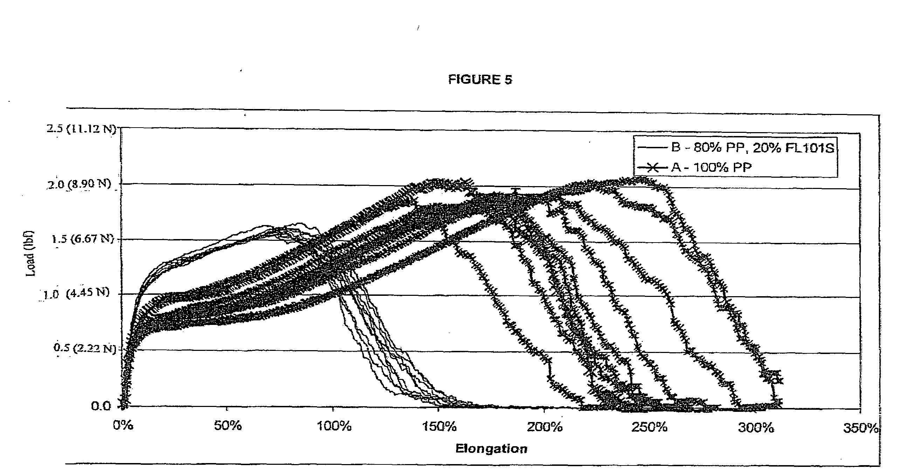

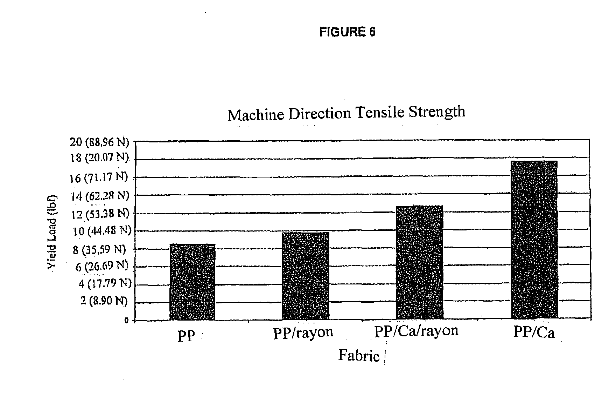

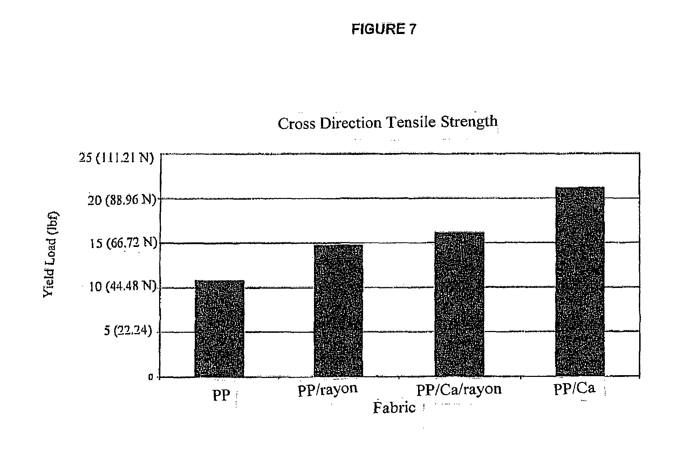

Figure 5 shows that at the intended range of use for a nonwoven fabric - namely, under 100% elongation - the strength of the 20% filled fibers is uniformly superior to the unfilled fibers. Figures 6 and 7, grab tensile strength results in the machine and cross machine direction, respectively, likewise show that a representative end product, a hydro-entangled fabric comprised of filled staple fibers, is stronger than a fabric made from 100% PP fibers. The filled fiber webs, with and without rayon, were stronger than the corresponding unfilled fiber webs.

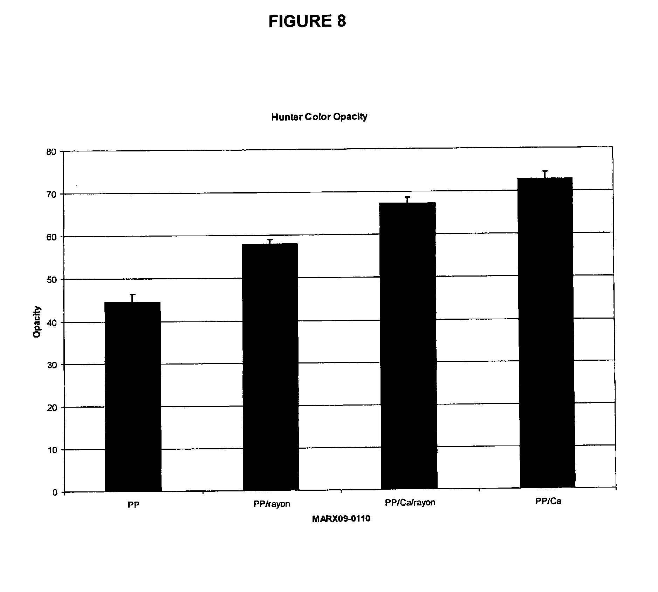

Another potentially desirable feature of nonwoven fabrics is opacity, which provides the end product with, for example, a whiter appearance. Figure 8 shows that the fabrics containing calcium carbonate are less transparent than unfilled fabrics, which may be desirable in some applications.

### Example 4

Further, the texture of a nonwoven fabric may be a desirable quality. For example, softness is a desirable surface feel for baby wipes. As demonstrated by this example, the fabric of the present invention may surprisingly deliver a desirable, soft feel, for example, without compromising the strength of the material.

Two panel studies were performed, using single-blind testing of 16 subjects, to measure preferences between the four types of fabrics used in Example 3. To simulate a popular consumer product, wet wipes, and draw meaningful comparisons, the tests were conducted with wet and dry fabrics. The wet fabrics were prepared by soaking the fabrics in a solution of 85% water, 10% aloe vera, and 5% ethyl alcohol. The sheets were suspended in air to drain excess liquid before being used. Each test constituted a comparison of two fabrics, with the subjects rating their preferences on a score sheet. In one test, performed in Roswell, Georgia, U.S.A., each subject rated the two fabrics based on three directional qualities - softer, stronger, thicker - and identified which of the two compared fabrics was better overall. The results of the Roswell test are shown below in Tables 2, 3, and 4. In the other test, performed in Par Moor, England, the subjects were asked to rate one quality, softness. The results of the Par Moor test are shown below in Table 5.

In both tests, the first comparison involved fabrics made from standard polypropylene fibers, one without rayon fibers, and one with rayon fibers, akin to a commercial product. Commercial manufacturers conventionally add rayon fibers to PP to improve aesthetic and textural qualities of fabrics. The panel study results show that the fabric containing rayon fibers generally was preferred for the measured qualities, particularly when the fabrics were wet. The second comparison was between one set of 100% PP fibers and one set of PP fibers filled with coated GCC. Both panels found the filled fibers superior, whether wet or dry. The third comparison rated PP-rayon fibers (40% rayon) to PP-rayon-GCC fibers (40% rayon, 12% coated GCC). The clear preference, whether wet or dry, was for the fabric containing rayon and coated GCC. This result suggests that the effect of rayon, blended alone with PP, does not by itself outstrip or even match the benefits provided when a GCC filler is introduced. Instead, by its presence, a GCC filler delivers a determining influence on these important textural qualities. The fourth comparison drew observations against a simulated commercial product (60% PP, 40% rayon) and filled PP with no rayon. Both panels rated the filled PP equal to or better than the simulated commercial product. This result, combined with the other three comparisons, indicates that the filled PP outperforms conventional fabrics containing rayon, delivering a solution that may obviate the addition of rayon, an expensive component of nonwoven fabrics.

**Table 2**

| | **Softer** | **Stronger** | **Thicker** |
|---|---|---|---|
| **Wet 1** | | | |
| PP | 23.3% | 10.0% | 41.4% |
| PP/Rayon | 70.0% | 86.7% | 55.2% |
| No Difference | 6.7% | 3.3% | 3.4% |
| | | | |

| **Wet 2** | | | |
|---|---|---|---|
| PP | 30.0% | 13.3% | 16.7% |
| PP/Ca | 63.3% | 86.7% | 80.0% |
| No Difference | 6.7% | 0.0% | 3.3% |
| | | | |

| **Wet 3** | | | |
|---|---|---|---|
| PP/Rayon | 13.8% | 6.7% | 24.1% |
| PP/Rayon/Ca | 48.3% | 66.7% | 41.4% |
| No Difference | 37.9% | 26.7% | 34.5% |

| **Wet 4** | | | |
|---|---|---|---|
| PP/Rayon | 33.3% | 16.7% | 10.0% |
| PP/Ca | 53.3% | 70.0% | 86.7% |
| No Difference | 13.3% | 13.3% | 3.3% |

**Table 3**

| | **Softer** | **Stronger** | **Thicker** |
|---|---|---|---|
| **Dry 1** | | | |
| PP | 56.7% | 10.0% | 33.3% |
| PP/Rayon | 20.0% | 80.0% | 50.0% |
| No Difference | 23.3% | 10.0% | 16.7% |
| | | | |

| **Dry 2** | | | |
|---|---|---|---|
| PP | 16.7% | 10.0% | 10.0% |
| PP/Ca | 73.3% | 90.0% | 90.0% |
| No Difference | 10.0% | 0.0% | 0 |
| | | | |

| **Dry 3** | | | |
|---|---|---|---|
| PP/Rayon | 6.7% | 0.0% | 13.3% |
| PP/Rayon/Ca | 76.7% | 80.0% | 66.7% |
| No Difference | 16.7% | 20.0% | 20.0% |
| | | | |

| **Dry 4** | | | |
|---|---|---|---|
| PP/Rayon | 6.7% | 6.7% | 10.0% |
| PP/Ca | 76.7% | 86.7% | 76.7% |
| No Difference | 16.7% | 6.7% | 13.3% |

**Table 4**

| **Fabric Sample Compositions** | Overall Preference | |
|---|---|---|
| | Wet | Dry |
| 100% PP | 0.00% | 37.50% |
| 60% PP, 40% Rayon | 100.00% | 50.00% |
| No Difference | 0.00% | 12.50% |
| | | |
| 100% PP | 6.25% | 6.25% |
| 80% PP, 20% FL101S | 93.75% | 87.50% |
| No Difference | 0.00% | 6.25% |
| | | |
| 60% PP, 40% Rayon | 6.25% | 6.25% |
| 48% PP, 40% Rayon, 12% FL101S | 81.25% | 87.50% |
| No Difference | 12.50% | 6.25% |
| | | |
| 60% PP, 40% Rayon | 31.25% | 0.00% |
| 80% PP, 20% FL101S | 62.50% | 93.75% |
| No Difference | 6.25% | 6.25% |

**Table 5**

| **Fabric Sample Compositions** | Softness Choice | |
|---|---|---|
| | Wet | Dry |
| 100% PP | 37.50% | 68.70% |
| 60% PP, 40% Rayon | 62.50% | 18.70% |
| No Difference | 0.00% | 12.50% |
| | | |
| 100% PP | 31.20% | 12.50% |
| 80% PP, 20% FL101S | 62.50% | 81.20% |
| No Difference | 6.20% | 6.20% |
| | | |
| 60% PP, 40% Rayon | 6.25% | 0.00% |
| 48% PP, 40% Rayon, 12% FL101S | 87.50% | 100.00% |
| No Difference | 6.25% | 0.00% |
| | | |
| 60% PP, 40% Rayon | 43.70% | 13.30% |
| 80% PP, 20% FL101S | 43.70% | 86.70% |
| No Difference | 12.50% | 0.00% |

### Example 5

Carpet samples made from polypropylene yarns with and without 20% calcium carbonate (FiberLink^{™} 101 S) were made. Monofilament fibers were produced by a melt spinning process. After extrusion, the monofilament fibers produced were attenuated by high-speed drawing, in which the multi-strand filament is drawn out on rollers until wound on cores. The fibers were then formed into yarn using a Card-Monroe Corporation tufting machine. The yarn had a twist per inch (per 2.54 cm) of 3. The yarn was tufted on a backing fabric and then the loops were cut. The carpet had a gauge of 10, face weight of 24 ounces per square yard (813.74 g per m²), 10 tuft rows per inch (per 2.54 cm) of width, and 14 stitches per inch (per 2.54 cm) on length, with pile heights of % , 3/8, and 1/2 inches (0.64, 0.95 and 1.27 cm respectively).

The carpet was tested and the results are shown in Table 6 below.

**Table 6**

| **Sample** | **Flammability** | **Electrostatic Propensity** | | **Turf Bind** | **Abrasion** |
|---|---|---|---|---|---|
| | | **Rubber** | **Leather** | | |
| ¼" (0.64 cm) with 20% FiberLink™ 101S | All passed | 0.4 kV | 0.1 kV | | |
| ¼" (0.64 cm) no filler (control) | All passed | 0.8 kV | 0.2 kV | | |
| 3/8" (0.95 cm) with 20% FiberLink™ 101S | | 0.4 kV | 0.1 kV | 0.8 lbs (0.36 kg) | 4500 cycles |
| 3/8" (0.95 cm) no filler control | | 0.7 kV | 0.5 kV | 0.7 lbs (0.32 kg) | 8000 cycles |

The electrostatic results were quite positive for the filled product. The pill flammability of both the control and the experimental samples passed.

The filled product had positive results for turf bind.

The lower number of cycles needed to abrade the carpet including the coated calcium carbonate may indicate that those yarns are softer. However, a value of 4500 may be used for indoor or outdoor carpet.

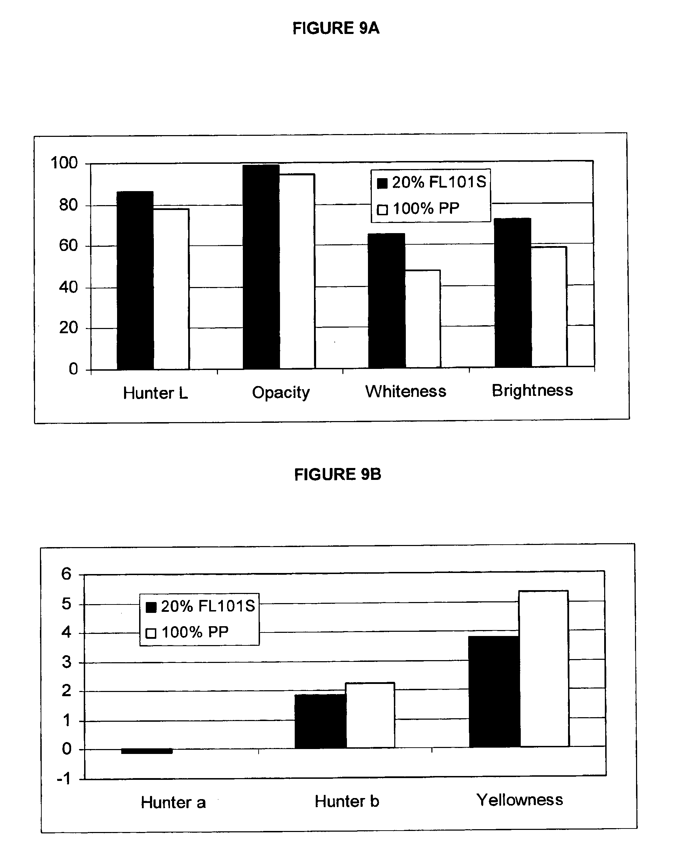

The color test properties of the carpet are shown in Figures 9A and 9B. In Figure 9A, the color properties of the filled samples are all better, with high values, that the control samples. Correspondingly, the properties shown in Figure 9B for the filled samples are better, with lower values, in comparison to the control samples. In other words, more white and opaque are positive qualities while less yellow is a desirable property.

## Claims

1. A carpet comprising:
a plurality of fibers comprising at least one polymeric resin and at least one coated filler,
wherein the at least one coated filler is ground calcium carbonate coated with at least one organic material chosen from fatty acids and salts and esters thereof, the at least one coated filler has an average particle size of less than or equal to 3 microns, and the at least one coated filler is present in an amount ranging from 5 wt% to 40 wt%,
and wherein each of the fibers are adjoined to another of the fibers, a backing material, or both.

2. The carpet of claim 1, wherein the at least one coated filler has an average particle size of less than or equal to 2 microns.

3. The carpet of claim 1 or claim 2, wherein the at least one coated filler has an average particle size of less than or equal to 1.5 microns.

4. The carpet of any of claims 1 to 3, wherein the fibers are staple fibers.

5. The carpet of any of claims 1 to 4, wherein the fibers are staple fibers formed from monofilament fiber.

6. The carpet of any of claims 1 to 5, having a 60 degree gloss ranging from 0 to 10, more preferably from 0 to 5, and most preferably from 0 to 2.5.

7. The carpet of any of claims 1 to 6, having an electrostatic propensity ranging from 0 kV to 3 kV, more preferably from 0 kV to 0.5 kV, and most preferably from 0 kV to 0.1 kV.

8. The carpet of any of claims 1 to 7, having a turf bind ranging from 0 lbs to 12 lbs, more preferably from 4 lbs to 10 lbs, and most preferably from 6 lbs to 8 lbs.

9. The carpet of any of claims 1 to 8, having a first opacity, a first whiteness, or a first brightness greater than a second opacity, a second whiteness, or a second brightness, respectively, of a second carpet comprising a plurality of second fibers, wherein the second fibers comprise the at least one polymeric resin and is devoid of the at least one coated filler.

10. The carpet of any of claims 1 to 9, having a first yellowness less than a second yellowness of a second carpet comprising a plurality of second fibers, wherein the second fibers comprise the at least one polymeric resin and is devoid of the at least one coated filler.

11. The carpet of any of claims 1 to 10, wherein the at least one coated filler has a top cut less than or equal to 65%, more preferably less than or equal to 70%, and most preferably less than or equal to 75%, of the fibers' diameter.

12. The carpet of any of claims 1 to 11, wherein the at least one coated filler is present in an amount ranging from 10 wt% to 25 wt%.

13. The carpet of any of claims 1 to 12, wherein the at least one coated filler is present in an amount ranging from 10 wt% to 15 wt%.

## Patentansprüche

1. Teppich, umfassend
eine Anzahl Fasern, umfassend mindestens ein polymerisches Harz und mindestens einen beschichteten Füller,
wobei der mindestens eine beschichtete Füller gemahlenes Calciumcarbonat ist, beschichtet mit mindestens einem organischen Stoff, ausgewählt aus Fettsäuren und deren Salzen und Estern, der mindestens eine beschichtete Füller eine durchschnittliche Korngröße von geringer oder gleich 3 Mikrometer hat, und der mindestens eine beschichtete Füller in einer Menge im Bereich von 5 Gew.-% bis 40 Gew.-% vorliegt,
und wobei jede der Fasern mit einer anderen der Fasern, einem Grundmaterial oder beiden verbunden ist.

2. Teppich gemäß Anspruch 1, wobei der mindestens eine beschichtete Füller eine durchschnittliche Korngröße von geringer oder gleich 2 Mikrometer hat.

3. Teppich gemäß Anspruch 1 oder Anspruch 2, wobei der mindestens eine beschichtete Füller eine durchschnittliche Korngröße von geringer oder gleich 1,5 Mikrometer hat.

4. Teppich gemäß irgendeinem der Ansprüche 1 bis 3, wobei die Fasern Stapelfasern sind.

5. Teppich gemäß irgendeinem der Ansprüche 1 bis 4, wobei die Fasern Stapelfasern sind, gebildet aus Monofilamentfaser.

6. Teppich gemäß irgendeinem der Ansprüche 1 bis 5, mit einem 60-Grad-Glanz im Bereich von 0 bis 10, bevorzugt von 0 bis 5, und am meisten bevorzugt von 0 bis 2,5.

7. Teppich gemäß irgendeinem der Ansprüche 1 bis 6 mit einer elektrostatischen Propensität im Bereich von 0 kV bis 3 kV, bevorzugt von 0 kV bis 0,5 kV, und am meisten bevorzugt von 0 kV bis 0,1 kV.

8. Teppich gemäß irgendeinem der Ansprüche 1 bis 7, mit einer Flächenbindung von 0 lbs bis 12 lbs, bevorzugt von 4 lbs bis 10 lbs, und am meisten bevorzugt von 6 lbs bis 8 lbs.

9. Teppich gemäß irgendeinem der Ansprüche 1 bis 8, mit einer ersten Opazität, einer ersten Weiße oder einer ersten Helligkeit, jeweils größer als eine zweite Opazität, eine zweite Weiße oder einer zweite Helligkeit eines zweiten Teppichs, umfassend eine Anzahl zweite Fasern, wobei die zweiten Fasern das mindestens eine polymerische Harz umfassen und denen der mindestens eine beschichtete Füller fehlt.

10. Teppich gemäß irgendeinem der Ansprüche 1 bis 9 mit einem ersten Gelbstich geringer als ein zweiter Gelbstich eines zweiten Teppichs, umfassend eine Anzahl zweite Fasern, wobei die zweiten Fasern das mindestens eine polymerische Harz umfassen und denen der mindestens eine beschichtete Füller fehlt.

11. Teppich gemäß irgendeinem der Ansprüche 1 bis 10, wobei der mindestens eine beschichtete Füller eine Obergrenze geringer oder gleich 65%, bevorzugt geringer oder gleich 70%, und am meisten bevorzugt geringer oder gleich 75% des Faserdurchmessers hat.

12. Teppich gemäß irgendeinem der Ansprüche 1 bis 11, wobei der mindestens eine beschichtete Füller in einer Menge im Bereich von 10 Gew.-% bis 25 Gew.-% vorliegt.

13. Teppich gemäß irgendeinem der Ansprüche 1 bis 12, wobei der mindestens eine beschichtete Füller in einer Menge im Bereich von 10 Gew.-% bis 15 Gew.-% vorliegt.

## Revendications

1. Un tapis comprenant :
une pluralité de fibres contenant au moins une résine polymère et au moins une charge enrobée,
où la au moins une charge enrobée est du carbonate de calcium broyé enrobé avec au moins un matériau organique choisi parmi acides gras et sels et esters de ceux-ci, la au moins une charge enrobée possède une taille de particule moyenne inférieure ou égale à 3 microns, et la au moins une charge enrobée est présente dans une quantité allant de 5% en poids à 40% en poids,
et où chacune des fibres est jointe à une autre des fibres, à un matériau de renfort, ou aux deux.

2. Le tapis selon la revendication 1, où la au moins une charge enrobée possède une taille de particule moyenne inférieure ou égale à 2 microns.

3. Le tapis selon la revendication 1 ou 2, où la au moins une charge enrobée possède une taille de particule moyenne inférieure ou égale à 1,5 micron.

4. Le tapis selon l'une quelconque des revendications 1 à 3, où les fibres sont des fibres discontinues.

5. Le tapis selon l'une quelconque des revendications 1 à 4, où les fibres sont des fibres discontinues formées à partir d'une fibre monofilament.

6. Le tapis selon l'une quelconque des revendications 1 à 5, possédant une brillance à 60 degrés allant de 0 à 10, de préférence de 0 à 5 et de préférence encore de 0 à 2,5.

7. Le tapis selon l'une quelconque des revendications 1 à 6, possédant une propension électrostatique allant de 0 kV à 3 kV, de préférence de 0 kV à 0,5 kV et de préférence encore de 0 kV à 0,1 kV.

8. Le tapis selon l'une quelconque des revendications 1 à 7, possédant une implantation de touffes allant de 0 Ibs à 12 Ibs, de préférence de 4 Ibs à 10 Ibs et de préférence encore 6 Ibs à 8 Ibs.

9. Le tapis selon l'une quelconque des revendications 1 à 8, possédant une première opacité, une première blancheur ou une première luminosité supérieures à une deuxième opacité, une deuxième blancheur ou une deuxième luminosité respectivement, d'un deuxième tapis comprenant une pluralité de deuxièmes fibres, où les deuxièmes fibres contiennent la au moins une résine polymère et sont dépourvues de la au moins une charge enrobée.

10. Le tapis selon l'une quelconque des revendications 1 à 9, possédant un premier jaunissement inférieur à un deuxième jaunissement d'un deuxième tapis comprenant une pluralité de deuxièmes fibres, où les deuxièmes fibres contiennent la au moins une résine polymère et sont dépourvues de la au moins une charge enrobée.

11. Le tapis selon l'une quelconque des revendications 1 à 10, où la au moins une charge enrobée possède une coupe supérieure inférieure ou égale à 65%, de préférence inférieure ou égale à 70% et de préférence encore inférieure ou égale à 75%, du diamètre des fibres.

12. Le tapis selon l'une quelconque des revendications 1 à 11, où la au moins une charge enrobée est présente dans une quantité allant de 10% en poids à 25% en poids.

13. Le tapis selon l'une quelconque des revendications 1 à 12, où la au moins une charge enrobée est présente dans une quantité allant de 10% en poids à 15% en poids.
